# EUROPEAN PATENT APPLICATION

(11) **EP 4 385 964 A1**
(43) Date of publication of application: **19.06.2024**
(21) Application number: 22213798.6
(22) Date of filing: 15.12.2022
(51) Int. Cl.: C04B 28/02, C04B 40/06, C04B 24/26

(54) **CEMENTITIOUS HYBRID PRIMER COMPOSITION**

(71) Applicant: Sika Technology AG, 6340 Baar (CH)
(72) Inventor: Gimeno Santos, Patricia, 70186 Stuttgart (DE); Rau, Carola, 71570 Oppenweiler (DE); Koniar, Pavol, 71686 Remseck (DE); Pflueger, Tim, 71665 Roßwag (DE); Grötzinger, Jochen, 73525 Schwäbisch Gmünd (DE); Pusel, Thomas, 71282 Hemmingen (DE)
(74) Representative: Sika Patent Attorneys

(57) **Abstract**

The present invention relates to a multi-component composition comprising a first component (A) comprising water and 18 - 32 weight-%, based on the total weight of the multi-component composition, of at least one copolymer **CP**, wherein the copolymer is a vinyl versatate copolymer **CPA**, and/or a copolymer based on styrene and (meth) acrylic acid esters **CPB**; and a second component (B) comprising at least one hydraulic binder, preferably cement.

The multi-component composition is especially suitable as a primer composition for the use for flooring.

## Description

### Technical field

The invention relates to cementitious hybrid primer materials, in particular for the manufacture of industrial flooring.

### Background of the invention

Floor coating systems are multi-layer systems typically containing a primer layer for good adhesion on the substrate, on top thereof a scratch coat layer if the substrate must be levelled out, followed by a self-levelling layer if desired and finally typically a sealer layer. As mentioned, these floor coatings typically contain a primer layer. Such primer layers are usually polyurethane-based or epoxy-based compositions, depending on the substrate and the chemical basis of the layer placed on top of said primer layer. Some of these primers only provide sufficient adhesion to the substrate, if the following layer has a similar chemical basis. It is especially challenging to provide a primer composition that provids sufficient adhesion to the substrate, especially concrete substrates, for all of such chemically dissimilar compositions like polyurethane-based, epoxy-based and cementitious-hybrid-based flooring compositions placed on said primer layer.

WO2020178457 A1 describes such a cementitious-hybrid-based flooring composition comprising a first component (A) comprising water, and a second component (B) comprising at least one hydraulic binder, wherein the multi-component composition comprises a vinyl versatate copolymer, and/or a copolymer based on styrene and (meth) acrylic acid esters. The amount of hydraulic binder, based on the total weight of the multi-component composition, is from 25 - 65 weight-%.

Thus, there is a demand for primer compositions, that provide good adhesion, especially high pull off strength values, for polyurethane-based, epoxy-based and cementitious-hybrid-based flooring compositions, and that have good applicability if applied to the substrate, preferably concrete substrates.

### Summary of the invention

Therefore, the object of the invention was to overcome the problems of the prior art discussed above, in particular to provide primer compositions, that provide good adhesion, especially high pull off strength values, for polyurethane-based, epoxy-based and cementitious-hybrid-based flooring compositions, and that have good applicability if applied to the substrate, preferably concrete substrates.

Surprisingly, this object could be achieved by providing a multi-component composition comprising
a first component (A) comprising water, and
18 - 32 weight-%, based on the total weight of the multi-component composition, of at least one copolymer **CP,** wherein the copolymer is a vinyl versatate copolymer **CPA,** and/or a copolymer based on styrene and (meth) acrylic acid esters **CPB,** preferably the copolymer **CP** is a copolymer based on styrene and (meth) acrylic acid esters **CPB;** and
a second component (B) comprising at least one hydraulic binder, preferably cement.

The invention also relates to a method for the manufacture of a primer coating for a flooring or coating with the multi-component composition.

The invention also refers to the respective use of the multi-component composition as a primer composition for the use for coatings and flooring, preferably flooring.

### Detailed description of the invention

The term "cementitious" refers to compositions including hydraulic binding agent such as cement and to the cured products thereof.

The terms "primer layer" or "primer coating" refers to the first layer of a multi-layer system that is applied to a substrate. The primer serves to provide adhesion for the entire layer structure, that means except for the primer also for the subsequent layers, and close possible pores in the substrate.

At first, the multi-component composition used according to the invention is explained. The multi-component composition comprises two or more individual components. The components are stored separately to avoid spontaneous reaction, preferably the multi-component composition consists of the first component (A) and the second component (B), and the first component (A) and second component (B) are stored separately. The separate components may be assembled as a package. For use, the components are mixed with each other. Optionally however, one or more additional components may be included for specific purposes. For instance, an additional component comprising coloring agents, such as pigments, may be used for coloring purposes.

### First component (A)

The first component comprises water. Optionally, one or more additives may be added to the first component. The first component is preferably a liquid component. The first component may be viscous but is generally pourable.

The first component (A) comprises 18 - 32 weight-%, based on the total weight of the multi-component composition, of at least one copolymer **CP,** wherein the copolymer is a vinyl versatate copolymer **CPA,** and/or a copolymer based on styrene and (meth) acrylic acid esters **CPB.** An amount of the at least one copolymer **CP** of less than 18 weight-% leads to insufficient pull off strength values. This can be seen, for example, in the comparison of Ex.1 - Ex.3 with Ex.4 - Ex.5. An amount of the at least one copolymer **CP** of more than 32 weight-% leads to insufficient application properties of the resulting composition.

Preferably, the amount of copolymer **CP,** based on the total weight of the multi-component composition, is from 20 - 30 weight-%, preferably 21 - 26 weight-%, more preferably 22 - 24 weight-%. Such a range of the at least one copolymer **CP** is advantageous with respect to good applicability and higher pull off strength values. This can be seen, for example, in the comparison of Ex.1 - Ex.3 with Ex.4 - Ex.5.

If the copolymer **CP** is a vinyl versatate copolymer **CPA,** it is preferably a vinyl versatate copolymer dispersion, more preferably a dispersion in which a vinyl versatate copolymer is dispersed in a dispersion medium, preferably water.

The vinyl versatate copolymer CPA is a copolymer containing vinyl versatate, which is an ester of versatic acid and vinyl alcohol, as a monomer unit-that is, a copolymer comprising monomer units including vinyl versatate.

Preferred of monomer units other than vinyl versatate are selected from the list consisting of ethylene, vinyl acetate and (meth)acrylesters.

The vinyl versatate copolymer may be, for example, a random copolymer, a block copolymer, or a graft polymer.

Preferably the vinyl versatate copolymer is selected from the group consisting of ethylene-vinyl acetate-vinyl versatate copolymer, vinyl acetate-vinyl versatate copolymer, vinyl acetate-vinyl versatate-(meth)acrylic acid ester copolymer and vinyl acetate-vinyl versatate-(meth)acrylic acid ester-ethylene copolymer, most preferably vinyl acetate-vinyl versatate copolymer.

Preferably the vinyl versatate copolymer has a number average mean particle size of 300 to 20 µm, preferably 150 to 50 µm.

Preferably, the at least one copolymer **CP** is a copolymer based on styrene and (meth) acrylic acid esters **CPB.** The copolymer based on styrene and (meth) acrylic acid esters **CPB** is preferably based on styrene and (meth) acrylic esters, e.g. C₁-C₇ alkyl-, e.g. methyl or ethyl or butyl, acrylate or C₁-C₇ alkyl-, e.g methyl or ethyl or butyl, methacrylate, or of acrylamides or methacrylamides , e.g. N-methoxyacrylamide or N-methoxy-methacrylamide, and other unsaturated monomers.

Especially preferred are copolymers of two or more, preferably 3 or 4, monomers selected from the group consisting of styrene, (meth) acrylic acid, C₁-C₇ alkyl-(meth) acrylate, especially methyl, ethyl and butyl (meth) acrylate and (meth) acrylamide. More preferably, the copolymer is based on monomers selected from the group consisting of styrene, C₁-C₇ alkyl- (meth) acrylate, especially methyl, ethyl and butyl (meth) acrylate. Most preferably, the copolymer is based on monomers styrene, butylacrylate and butylmethacrylate.

Preferably the copolymer based on styrene and (meth) acrylic acid esters **CPB** is a dispersion, more preferably an aqueous dispersion.

Most preferably, the copolymer **CP** is a copolymer based on styrene and (meth) acrylic acid esters **CPB,** especially a copolymer **CPB** disclosed as preferred in the preceding text. Most preferably, the copolymer **CPB** is based on monomers selected from the group consisting of styrene, C₁-C₇ alkyl- (meth) acrylate, especially methyl, ethyl and butyl (meth) acrylate, especially the copolymer is based on monomers styrene, butylacrylate and butylmethacrylate.

Most preferably, the amount of copolymer **CPB,** based on the total weight of the multi-component composition, is from 20 - 30 weight-%, preferably 21 - 26 weight-%, more preferably 22 - 24 weight-%.

The first component (A) comprises water. Preferably, the first component (A) contains water in an amount, based on the total weight of the multi-component composition, from 17.5 - 35 weight-%, preferably 20 - 32.5 weight-%, more preferably 23 - 30 weight-%. Such a range is advantageous with respect to good applicability and higher pull off strength values. This can be seen, for example, in the comparison of Ex.1 - Ex.3 with Ex.4 - Ex.5 or in the comparison of Ex.1 with Ex.6.

Apart from the water and the at least one copolymer **CP,** the first component may contain further additives. Preferably said further optional additives are selected from the list consisting of plasticizers, pigments, adhesion promoters, especially epoxysilanes, (meth)acrylatosilanes and alkylsilanes, stabilizers against heat light and UV radiation, thixotropic agents, flow improving additives, defoamers, wetting agents, flow control agents, deaerating agents, biocides and emulsifiers. More preferably, said optional additives are selected from the list consisting of thixotropic agents, defoamers and wetting agents.

Preferably, said further optional additives are present in an amount of 0.5 - 10 weight-%, preferably 1 - 8 weight-%, more preferably 1 - 7.5 weight-%, based on the total weight of the multi-component composition.

### Second component (B)

The second component (B) comprises at least one hydraulic binding agent, preferably cement.

A hydraulic binding agent is a substantially inorganic or mineral material or blend, which hardens when mixed with water. Hydraulic binders also encompasses latent hydraulic binders or pozzolanic binders which usually requires activation, e.g. by the presence of lime, in order to show hydraulic properties.

Typical examples of hydraulic binders are at least one of cement, e.g. Portland cement, fly ash, granulated blast furnace slag, lime, such as limestone and quicklime, rice husk, calcined paper sludge, fumed silica and pozzolana or a mixture thereof.

The hydraulic binder preferably comprises cement, in particular Portland cement. More preferably, the hydraulic binder is cement. Hydraulic binders such as cement often include in addition calcium sulfate, such as gypsum, anhydrite and hemihydrate.

The amount of hydraulic binder, based on the total weight of the multi-component composition, is preferably from 10 - 25 weight-%, preferably 12.5 - 22.5 weight-%, more preferably 15 - 20 weight-%. If the amount is less than 10 weight-%, the cured composition will have a reduced ability to close pores in the substrate and reduced pull off values. An amount of more than 30 weight-% leads to a short open time that will make the application of the mixed composition more challenging.

Further, the multi-component composition is preferably formulated such that the weight ratio of water to hydraulic binder is in the range of 1.0 to 1.8, preferably in the range of 1.2 to 1.6, more preferably in the range of 1.3 to 1.5. Such a ratio is advantageous with respect to good applicability and higher pull off strength values. This can be seen, for example, in the comparison of Ex.1 - Ex.3 with Ex.4 - Ex.5 or in the comparison of Ex.1 with Ex.6.

The second component (B) preferably contains at least one or more aggregates. Aggregates are chemically inert, solid particulate materials. Aggregates come in various shapes, sizes, and materials ranging from fine particles of sand to large, coarse rocks. Examples of suitable aggregates are sand, such as silica sand, gravel, and crushed stone, slag, lightweight aggregates such as clay, pumice, perlite, and vermiculite. Sand, in particular silica sand, is preferred.

The grain size of the aggregates may vary depending on the application, but is preferably rather small, e.g. not more than 6 mm, preferably not more than 4 mm. The aggregate may have, for instance, a grain size in the range of 0.05 to 4 mm, preferably 0.1 to 3 mm, wherein sand, in particular silica sand, having a grain size in the range of 0.1 to 3 mm, is particularly preferred. For instance, sand having a grain size ranging from 0.3 to 0.8 mm or from 0.1 to 0.5 mm can be advantageously used in the present invention. The grain size range can be determined, e.g. by sieve analysis.

Preferably, the amount of aggregates, based on the total weight of the multi-component composition, is from 10 - 30 weight-%, preferably 15 - 25 weight-%, more preferably 17.5 - 23.5 weight-%.

The second component (B) preferably contains calcium carbonate.

The calcium carbonate particles preferably have an average diameter D50 with a range from 1 to 200 µm, more preferably from 2 to 100 µm, 2 to 50 µm, 3 to 20 µm , 3 to 10 µm , even more preferably from 3 to 7.5 µm.

The D50 value of the cumulative frequency distribution of the calcium carbonate particles as obtained by laser diffraction methods indicates that 50% of the particles have a diameter equal to or less than the specified value. The size distribution curve can be determined by laser diffractometry.

Preferably, the amount of calcium carbonate, based on the total weight of the multi-component composition, is from 2.5 - 10 weight-%, 3.5 - 9 weight-%, 4-8 weight-%, 5-8 weight-%, more preferably 6-8 weight-%.

The second component (B) preferably comprises one or more additives selected from the list consisting of superplastizicers, preferably polycarboxylate ether (PCE), oils, preferably mineral oil, paraffin oil and organic oil, cellulose fibers, and inorganic or organic pigments, preferably selected from superplastizicers and inorganic or organic pigments.

The multi-component composition preferably consists of a first component (A) and a second component (B), wherein:
The first component (A) contains:
- 20 - 30 weight-%, preferably 21 - 26 weight-%, more preferably 22 - 24 weight%weight-%, based on the total weight of the multi-component composition, of at least one copolymer **CP,** preferably a copolymer based on styrene and (meth) acrylic acid esters **CPB;**
- 17.5 - 35 weight-%, preferably 20 - 32.5 weight-%, more preferably 23 - 30 weight-%, based on the total weight of the multi-component composition, of water;
- Preferably 0.5 - 10 weight-%, preferably 1 - 8 weight-%, more preferably 1 - 7.5 weight-%, based on the total weight of the multi-component composition, of additives selected from the list consisting of plasticizers, pigments, adhesion promoters, stabilizers against heat light and UV radiation, thixotropic agents, flow improving additives, defoamers, wetting agents, flow control agents, deaerating agents, biocides and emulsifiers, preferably selected from thixotropic agents, defoamers and wetting agents.

The second component (B) contains:
- 10 - 25 weight-%, preferably 12.5 - 22.5 weight-%, more preferably 15-20 weight-%, based on the total weight of the multi-component composition, of at least one hydraulic binder, preferably cement;
- 10 - 30 weight-%, preferably 15 - 25 weight-%, more preferably 17.5 - 23.5 weight-%, based on the total weight of the multi-component composition, of at least one or more aggregates, preferably sand;
- Preferably 1 - 8 weight-%, preferably 2.5 - 6.5 weight-%, more preferably 3.5 - 5.5 weight-%, based on the total weight of the multi-component composition, of calcium carbonate.

Preferably, the weight ratio of water to hydraulic binder is in the range of 1.0 to 1.8, preferably in the range of 1.2 to 1.6, more preferably in the range of 1.3 to 1.5.

### Mixture

For using the multi-component composition, preferably as a primer composition for the use for coatings and flooring, preferably flooring, the components of the composition are mixed before usage.

When the components are mixed together, hydration and curing reactions begin so that the composition is to be processed within the open time after mixing the components. The term "open time" is understood to mean the duration of processability when the components are mixed with each other. The end of the open time is usually associated with viscosity increase of the composition such that processing of the compositions is no longer possible.

When the components are mixed, the one or more hydraulic binding agent reacts with water. This reaction is generally called hydration. Upon the reaction with water, the hydraulic binding agent is cured to a solid material.

### Method for the manufacture of a primer coating for a flooring or coating, preferably flooring

The invention also relates to the method for the manufacture of a primer coating for a flooring or coating, preferably flooring, with the multi-component composition described before, wherein the method comprises the steps: a) mixing first component (A) and second component (B), b) applying the mixed material to a substrate, preferably in an amount of 100 - 300 g/m², more preferably 150 - 250 g/m², c) optionally smoothing the applied mixed material, and d) curing the applied mixed material, to obtain the primer coating.

It is preferred, that after step d) a primer coating with a thickness of 0.05 - 0.2 mm, preferably 0.1 - 0.15 mm, is obtained.

The substrate the primer coating is applied to is preferably selected from the list consisting of:
- concrete, mortar, cement screed, fibre cement, brick, tile, plaster, gypsum, natural stone, ceramic, glass and
- repair or leveling materials based on PCC (polymer-modified cement composition) or ECC (epoxy-modified cement composition);
most preferably concrete.

Preferably, the mixed material is applied in liquid state within its pot life, typically by being poured onto the substrate, followed by being spread with a tool such as a squeegee, a notched trowel or a roller, to get the desired dry film thickness.

The application temperature for the mixed material is preferably from 0 to 40°C, 8 to 40°C, preferably from 12 to 35°C.

As mentioned above, scratch coat layers are usually applied on top of the primer layer/coating if the substrate is very uneven and must be levelled out. Said primer and scratch coat layers/coating usually consist of separate commercial products and require a significant amount of different commercial products on the application site and in the storage facility. It was surprisingly found that the first component (A) and the second component (B) of the current solutions can be applied as a thin layer as primer layer in a certain weight ratio, and the same components used in a different weight ratio with additional water added can be applied on top of the primer layer as a thicker scratch coat layer, without drawbacks in the final pull-off properties of the cured layers. This surprisingly provides a "one-product fits both" solution of a multi-component system that can be used as the basis for both, primer- and scratch coat layer on the application site. When applied as a primer layer, component (A) and component (B) can be used "as is" in a certain weight ratio of component (A) to component (B). If used for the scratch coat, they can be mixed in another weight ratio of component (A) to component (B) and diluted with additional tab water. Such a system would make the need for multiple commercial products on the application site and storage/supply location redundant since only one type of component (A), component (B) respectively, must be present on the application site and storage/supply location. Ex.4 and Ex.5 in table 2 in the experimental sections are possible examples of such compositions usable as scratch coat layers. They are based on the same component (A) component (B) as the primer compositions Ex.1 - Ex.3 and Ex.6 but in another weight ratio, as is indicated in table 2 as "Weight ratio (A:B)", and containing additional water.

It is therefore preferably if in the method mentioned before, subsequent to step d):
- A first component (A) and a second component (B), as described before as the first component (A), respectively the second component (B), are mixed in the following a weight ratio of first component (A) : second component (B) (weight ratio A: B) = 1 : 3 - 1 : 5, preferably 1 : 3.5 - 1 : 4.5, more preferably 1 : 3.75 - 1 : 4.25.
- The first component (A) and second component (B) are mixed with the addition of additional water, wherein the total amount of added water is, based on the obtained mixture of first component (A) and second component (B) and added water, from 4 - 15 weight-%, preferably 6 - 12.5 weight-%, more preferably 7-10 weight-%.
- The obtained mixture is applied on top of the primer coating obtained in step d), preferably in an amount of 300 - 1000 g/m², more preferably in an amount of 500 - 800 g/m², to obtain a scratch coating.

The used first component (A) and the used second component (B) have the same chemical components and amount of said chemical components as the first component (A) and second component (B) used in step a) of the method mentioned before. This makes the need for multiple commercial products on the application site and storage/supply location redundant, since both, primer- and scratch coating can be obtained using the same first component (A) and the used second component (B). The applicant only must vary the mixing ratios and add additional water in order to obtain the scratch coating.

Preferably, after the mentioned application, a scratch coating with a thickness of 0.2 - 0.6 mm, preferably 0.3 - 0.5 mm, is obtained.

Preferably, a first component (A) and a second component (B) is used as described as preferred first component (A) and a second component (B) above.

The invention also relates to the method of a floor covering, wherein a composition selected from the list of consisting of polyurethane-based compositions, epoxy-based compositions and cementitious-hybrid-based compositions, is applied on a primer coating or on a scratch coating obtained in the method for the manufacture of a primer coating described before, preferably in an amount of 1000 - 10000 g/m², more preferably 2000 - 7000 g/m².

Said cementitious-hybrid-based compositions are preferably polyurethane cementitious-hybrid-based compositions, epoxy cementitious-hybrid-based compositions and acrylic cementitious-hybrid-based compositions.

It can be especially preferred if a cementitious-hybrid-based composition is used, that used the same first component (A) and the second component (B) as the primer layer and scratch coat layer. In addition, the same preferred weight ratios (A:B) and the same preferred amount of additional water is used as described to be preferred for the scratch coating mentioned above, optionally adding additional pigments. Most preferably, the composition of the cementitious-hybrid-based composition is more than 80 % identical, more preferably more than 90 % identical, most preferably more than 95 % identical to the total weight of the scratch coating. Such a system/method would ever further reduce the amount of different commercial products on the application site and storage/supply location.

It is preferred, that after mentioned application of the composition, a cured layer with a thickness of said composition of 1 - 15 mm is obtained. In case of polyurethane-based compositions and epoxy-based compositions, preferably a layer with a thickness of the cured composition of 1.5 - 3 mm is obtained. In case of cementitious-hybrid-based compositions, preferably a layer with a thickness of the cured composition of 4 - 8 mm is obtained.

As shown for Ex.1, the applied primer composition provides good adhesion for polyurethane-based compositions (Pull-off 7d PU), epoxy-based compositions (Pull-off 7d EP) and cementitious-hybrid-based compositions (Pull-off 7d Cem-EP and Cem-PU). The later contain a layer of Ex.4 on top of a layer of Ex.1 covered with a polyurethane-based or epoxy-based composition. Therefore showing that the primer coating can provide sufficient adhesion to a cementitious-hybrid-based composition (Ex.4).

The invention also relates to the use of a multi-component composition as described before as a primer composition for the use for coatings and flooring, preferably flooring.

Preferably, the primer composition is applied to a substrate selected from the list consisting of:
- concrete, mortar, cement screed, fibre cement, brick, tile, plaster, gypsum, natural stone, ceramic, glass and
- repair or leveling materials based on PCC (polymer-modified cement composition) or ECC (epoxy-modified cement composition),
most preferably concrete.

Preferably, the primer composition is applied to the substrate in an amount of 100 - 300 g/m², more preferably 150 - 250 g/m². It is further preferred if a primer coating with a thickness of 0.05 - 0.2 mm, preferably 0.1 - 0.15 mm, is obtained.

Preferably, the cured primer composition provides the following properties:
Pull off strength, determined as mentioned in the experimental section, after 28 days stored at (23±2)°C and (50±5)% relative humidity: >1.5, preferably >1.7 N/mm².
Application, determined as mentioned in the experimental section: unstructured surface without open pores.

The above-mentioned properties are preferably measured as described in the experimental part.

The invention is further explained in the following experimental part, which, however, shall not be construed as limiting the scope of the invention. The proportions and percentages indicated are by weight, unless otherwise stated.

### Examples

The following commercial products were used in the examples:

**Table 1**

| | | |
|---|---|---|
| CPB | REVACRYL AE 3737, 50 wt.-% solid in water, aqueous dispersion of an acrylic ester-styrene copolymer. Only the solid weight (50 wt.-% of product) of the product is shown in table 2 as "CPB". The remaining 50 wt.-% is shown as "water". | Worlée-Chemie GmbH, Germany |
| Defoamer | Mineral-oil-based defoamer | |
| WA | Silane-based wetting agent | |
| TA | Thixotropic agent | |
| Cement | Valderrivas BL CEM \| 52.5R, portland cement | Cementos Portland Valderrivas S.A., Pamplona, Spain |
| Sand | Quartz sand GEBA/BCS 413, quartz sand with a grain size in the range from 0.06 to 0.3 mm | Quarzwerke Österreich GmbH, Melk, Austria |
| CaCO3 | Omyacarb 10 GU, 7µm CaCO3 | Omya Inc, USA |
| SP | SIKA VISCOCRETE-225 POWDER, polycarboxylate ether (PCE), superplastizicer | Sika Germany |
| Additional water | Tab water | |

### Examples

A first component (A) and a second component (B) containing the products listed above were prepared with the products and weight portions given in table 2 below. With respect to CPB, the dry/solid weight of REVACRYL AE 3737 is shown in Table 2 and the contained water in these commercial products was added to "Water". Hence if 10 wt.-% of REVACRYL AE 3737 were to be used in Component A, 5 wt.-% of "CPB" and 5 wt.-% of "Water" would be shown in table 2.

### Measuring methods

The properties of the multi-component compositions were tested according to the methods mentioned below. The results are shown in table 2. The weight ratio of water to hydraulic binder is indicated with "w/c". The weight ratio of the Component A to the Component B is indicated as "Weight ratio (A:B)".

### Pull off strength/Bond strength (Pull-off):

The compositions Ex.1 - Ex.6 were applied on concrete plates. In the case of Ex.1 - Ex.3 and Ex.6 (primer coating), 350 g/m² was applied. In the case of Ex.4 and Ex.5 (scratch coating) 1000 g/m² was applied. On top of the cured coatings, the following layers were applied on top of said cured coatings:

| | |
|---|---|
| EP | Sikafloor-264N, 2 component epoxy coating, Sika Germany, 2500 g/m² |
| PU | Sikafloor-2340, 2 component polyurethane coating, Sika Germany, 2500 g/m² |
| Cem-EP | On top of the cured primer coating Ex.1, 1000 g/m² Ex.4 scratch coating was applied. On the cured scratch coating, 2500 g/m² Sikafloor-264N was applied |
| Cem-PU | On top of the cured primer coating Ex.1, 1000 g/m² Ex.4 scratch coating was applied. On the cured scratch coating, 2500 g/m² Sikafloor-2340 was applied |

The bond strength was determined using a tensile loading device according to EN 24624. At least 4 tests were performed according to DIN EN 1542 (07/1999) and EN 13892-8:2002.

All test specimens were stored at (23±2)°C and (50±5)% relative humidity prior to the test for the indicated time (7d, 28d respectively). The tensile load was increased at a constant rate of (0,05±0,01) N/(mm²s). The bond strength was calculated as the mean value from the 4 single values.

### Application:

The application behaviour was determined according to the following method:
The respective components must be each at a temperature of 20°C ± 2°C before mixing. The components are mixed, and the testing material obtained is then poured onto a test surface and brought to equally level by using a roller. The resulting layer after curing was visually assessed using the following classification: good = surface is level, no remaining marks of the roller could be visually detected, no open pores detectable.
moderate = to level the surface additional moderate help of a roller was needed, marks of the roller could be visually detected, very few open pores detectable.
insufficient = very difficult to level the surface using a roller, mortar like behavior, many open pores detectable.

**Table 2, n.d. = not determined**

| | **Ex.1** | **Ex.1** | **Ex.2** | **Ex.2** | **Ex.3** | **Ex.3** | **Ex.4** | **Ex.4** | **Ex.5** | **Ex.5** | **Ex.6** | **Ex.6** |
|---|---|---|---|---|---|---|---|---|---|---|---|---|
| | Parts | Wt.-% | Parts | Wt.-% | Parts | Wt.-% | Parts | Wt.-% | Parts | Wt.-% | Parts | Wt.-% |
| **Component A** | | | | | | | | | | | | |
| CPB | 43.84 | 23.07 | 43.84 | 24.35 | 43.84 | 25.79 | 43.84 | 7.65 | 43.84 | 8.03 | 43.84 | 23.07 |
| Water | 43.84 | 23.07 | 43.84 | 24.35 | 43.84 | 25.79 | 43.84 | 7.65 | 43.84 | 8.03 | 53.62 | 28.22 |
| Defoamer | 2.00 | 1.05 | 2.00 | 1.11 | 2.00 | 1.18 | 2.00 | 0.35 | 2.00 | 0.37 | 2.00 | 1.05 |
| WA | 9.78 | 5.15 | 9.78 | 5.43 | 9.78 | 5.75 | 9.78 | 1.71 | 9.78 | 1.79 | 0.00 | 0.00 |
| TA | 0.55 | 0.29 | 0.55 | 0.31 | 0.55 | 0.32 | 0.55 | 0.10 | 0.55 | 0.10 | 0.55 | 0.29 |

| **Component B** | | | | | | | | | | | | |
|---|---|---|---|---|---|---|---|---|---|---|---|---|
| Cement | 36.33 | 19.12 | 32.29 | 17.94 | 28.26 | 16.62 | 171.56 | 29.94 | 161.47 | 29.57 | 36.33 | 19.12 |
| Sand | 43.91 | 23.11 | 39.03 | 21.68 | 34.15 | 20.09 | 207.34 | 36.19 | 195.15 | 35.74 | 43.91 | 23.11 |
| CaCO3 | 9.47 | 4.99 | 8.42 | 4.68 | 7.37 | 4.33 | 44.74 | 7.81 | 42.10 | 7.71 | 9.47 | 4.99 |
| SP | 0.28 | 0.15 | 0.25 | 0.14 | 0.22 | 0.13 | 1.34 | 0.23 | 1.26 | 0.23 | 0.28 | 0.15 |
| **Additional water** | | | | | | | 48.00 | 8.38 | 46.00 | 8.43 | | |
| **Total** | 190.00 | 100.00 | 180.00 | 100.00 | 170.00 | 100.00 | 572.99 | 100.00 | 545.99 | 100.00 | 190.00 | 100.00 |
| | | | | | | | | | | | | |
| w/c | 1.21 | | 1.36 | | 1.55 | | 0.54 | | 0.56 | | 1.48 | |
| Weight ratio (A:B) | 1: 0.9 | | 1: 0.8 | | 1: 0.7 | | 1 : 4.25 | | 1 : 4.00 | | 1: 0.9 | |
| Application | good | | good | | good | | good | | good | | good | |
| Pull-off 7d EP | 1.11 | | 1.05 | | 1.03 | | 0.74 | | 0.96 | | 1.24 | |
| Pull-off 7d PU | 1.61 | | n.d. | | n.d. | | 1.09 | | n.d. | | n.d. | |
| Pull-off 7d Cem-EP | 1.02 | | n.d. | | n.d. | | n.d. | | n.d. | | n.d. | |
| Pull-off 7d Cem-PU | 1.25 | | n.d. | | n.d. | | n.d. | | n.d. | | n.d. | |
| Pull-off 28d EP | 1.73 | | n.d. | | n.d. | | n.d. | | n.d. | | n.d. | |
| Pull-off 28d PU | 1.83 | | n.d. | | n.d. | | n.d. | | n.d. | | n.d. | |

## Claims

1. Multi-component composition comprising
a first component (A) comprising water, and
18 - 32 weight-%, based on the total weight of the multi-component composition, of at least one copolymer **CP,** wherein the copolymer is a vinyl versatate copolymer **CPA,** and/or a copolymer based on styrene and (meth) acrylic acid esters **CPB,** preferably the copolymer **CP** is a copolymer based on styrene and (meth) acrylic acid esters **CPB;** and
a second component (B) comprising at least one hydraulic binder, preferably cement.

2. Multi-component composition according to claim 1, wherein the amount of copolymer **CP,** based on the total weight of the multi-component composition, is from 20 - 30 weight-%, preferably 21 - 26 weight-%, more preferably 22 - 24 weight-%.

3. Multi-component composition according to any of the proceeding claims, wherein the vinyl versatate copolymer **CPA** is selected from the group consisting of ethylene-vinyl acetate-vinyl versatate copolymer, vinyl acetate-vinyl versatate copolymer, vinyl acetate-vinyl versatate-(meth)acrylic acid ester copolymer and vinyl acetate-vinyl versatate-(meth)acrylic acid ester-ethylene copolymer, preferably wherein the vinyl versatate copolymer **CPA** is a vinyl acetate-vinyl versatate copolymer.

4. Multi-component composition according to any of the proceeding claims, wherein the copolymer based on styrene and (meth) acrylic acid esters **CPB** is based on two or more, preferably 3 or 4, monomers selected from the group consisting of styrene, (meth) acrylic acid, C₁-C₇ alkyl-(meth) acrylate, especially methyl, ethyl and butyl (meth) acrylate and (meth) acrylamide, more preferably the copolymer is based on monomers selected from the group consisting of styrene, C₁-C₇ alkyl-(meth) acrylate, especially methyl, ethyl and butyl (meth) acrylate.

5. Multi-component composition according to claim 1, wherein the copolymer **CP** is a copolymer based on styrene and (meth) acrylic acid esters **CPB,** preferably a copolymer **CPB** according to claim 4, more preferably the copolymer **CPB** is based on monomers selected from the group consisting of styrene, C₁-C₇ alkyl- (meth) acrylate, especially methyl, ethyl and butyl (meth) acrylate; preferably the amount of copolymer **CPB,** based on the total weight of the multi-component composition, is from 20 - 30 weight-%, preferably 21 - 26 weight-%, more preferably 22 - 24 weight-%.

6. Multi-component composition according to any of the proceeding claims, wherein the first component (A) contains water in an amount, based on the total weight of the multi-component composition, from 17.5 - 35 weight-%, preferably 20 - 32.5 weight-%, more preferably 23 - 30 weight-%.

7. Multi-component composition according to any of the proceeding claims, wherein the second component (B) contains the at least one hydraulic binder, preferably cement, in an amount, based on the total weight of the multi-component composition, from 10 - 25 weight-%, preferably 12.5 - 22.5 weight-%, more preferably 15 - 20 weight-%.

8. Multi-component composition according to any of the proceeding claims, wherein the second component (B) contains at least one or more aggregates, preferably sand, preferably the one or more aggregates are contained in an amount, based on the total weight of the multi-component composition, from 10 - 30 weight-%, preferably 15-25 weight-%, more preferably 17.5 - 23.5 weight-%.

9. Multi-component composition according to any of the proceeding claims, wherein the second component (B) contains calcium carbonate, preferably in an amount, based on the total weight of the multi-component composition, from 1 - 8 weight-%, preferably 2.5 - 6.5 weight-%, more preferably 3.5 - 5.5 weight-%.

10. Multi-component composition according to any of the proceeding claims, wherein the weight ratio of water to hydraulic binder is in the range of 1.0 to 1.8, preferably in the range of 1.2 to 1.6, more preferably in the range of 1.3 to 1.5.

11. Multi-component composition according to any of the proceeding claims, wherein the multi-component composition consists of the first component (A) and the second component (B), and the first component (A) and second component (B) are stored separately.

12. Method for the manufacture of a primer coating for a flooring or coating, preferably flooring, with a multi-component composition according to any of claims 1 to 11, wherein the method comprises the steps:
a) mixing first component (A) and second component (B),
b) applying the mixed material to a substrate, preferably in an amount of 100 - 300 g/m², more preferably 150 - 250 g/m²,
c) optionally smoothing the applied mixed material, and
d) curing the applied mixed material, to obtain the primer coating.

13. Method according to claim 12, wherein, subsequent to step d):
- a first component (A) and a second component (B), as described in any of the claims 1 - 11 as first component (A), respectively second component (B), are mixed in a weight ratio first component (A) : second component (B) (weight ratio A : B) of 1 : 3 - 1 : 5, preferably 1 : 3.5 - 1 : 4.5, more preferably 1 : 3.75 - 1 : 4.25 with the addition of additional water, wherein the total amount of added water is, based on the obtained mixture of first component (A) and second component (B) and added water, from 4 - 15 weight-%, preferably 6 - 12.5 weight-%, more preferably 7
- 10 weight-%; and
- the obtained mixture is applied on top of the primer coating obtained in step d), preferably in an amount of 300 - 1000 g/m², more preferably 500 - 800 g/m², to obtain a scratch coating, wherein the used first component (A) and the used second component (B) have the same chemical components and amount of said chemical components as the first component (A) and second component (B) used in step a) in claim 12.

14. Method for the manufacture of a floor covering, wherein a composition selected from the list consisting of polyurethane-based compositions, epoxy-based compositions and cementitious-hybrid-based compositions, is applied on a primer coating obtained in a method according to claim 12 or on a scratch coating obtained in a method according claim 13, preferably in an amount of 1000 - 10000 g/m², more preferably 2000 - 7000 g/m².

15. Use of a multi-component composition according to any of claims 1 to 11 as a primer composition for the use for coatings and flooring, preferably flooring.
